# EUROPÄISCHE PATENTSCHRIFT

(11) **EP 2 340 147 B1**
(45) Veröffentlichungstag und Bekanntmachung des Hinweises auf die Patenterteilung: **15.08.2012**
(21) Anmeldenummer: 09779492.9
(22) Anmeldetag: 15.05.2009
(51) Int. Cl.: B23Q 7/04, B23Q 39/02, B27C 9/04, B27F 4/00

(54) **BEARBEITUNGSMASCHINE FÜR SECHSSEITIGE BEARBEITUNG**
PROCESSING MACHINE FOR SIX-SIDED PROCESSING
MACHINE D'USINAGE POUR USINAGE DE SIX FACES

(30) Priorität: 23.09.2008 DE 202008012632 U
(43) Veröffentlichungstag der Anmeldung: 06.07.2011
(73) Patentinhaber: Weeke Bohrsysteme GmbH, 33442 Herzebrock-Clarholz (DE)
(72) Erfinder: HEIMANN, Reinhard, 33332 Gütersloh (DE); ALBERS, Jürgen, 59302 Oelde (DE)
(74) Vertreter: HOFFMANN EITLE
(86) Internationale Anmeldenummer: PCT/EP2009/055925
(87) Internationale Veröffentlichungsnummer: WO 2010/034530

(56) Entgegenhaltungen:
- EP-A- 1 712 337
- WO-A-92/12816
- DE-U1- 20 107 937

## Beschreibung

### Gebiet der Erfindung

Die vorliegende Erfindung betrifft eine Bearbeitungsmaschine zur Bearbeitung von bevorzugt plattenförmigen Werkstücken in einem Bearbeitungsraum. Die Bearbeitung ist bevorzugt darauf gerichtet, Werkstücke aus Holz, Holzwerkstoffen, Kunststoffen oder Leichtmetallen bearbeiten zu können. Die aufgezählten Werkstoffarten können auch in Kombination zueinander auftreten. Zwar werden mit der erfindungsgemäßen Bearbeitungsmaschine Werkstücke bevorzugt spanend bearbeitet, allerdings sind spanlose Bearbeitungsverfahren durchführbar.

### Stand der Technik

Aus dem Stand der Technik sind Bearbeitungsmaschinen bekannt, die eine beidseitige Bearbeitung von plattenförmigen Werkstücken gestatten. Somit können identische oder spiegelbildliche Bauteile in einem Arbeitsgang und in einer Werkstückaufspannung hergestellt werden. Solche Maschinen weisen gängigerweise einen Beschickungsbereich, einen Bearbeitungsbereich und einen Entnahmebereich auf.

In einem Bearbeitungsschritt werden bei diesen Maschinen plattenförmige Werkstücke in den Beschickungsbereich eingelegt, von Zangen gegriffen und in den Bearbeitungsbereich gefördert. Hier wird eine Auflagefläche zur Abstützung verwendet, während die entsprechenden Bearbeitungsschritte an der Ober- und Unterseite durchgeführt werden. Während der Bearbeitung halten die Zangen das Werkstück gegriffen, um es gegen Verrutschen zu sichern. Nach Beendigung der Bearbeitung wird das Werkstück dann aus dem Bearbeitungsraum heraus in den Entnahmebereich gefördert.

Weiter sind Bearbeitungsmaschinen bekannt, bei denen es unter anderem vorgesehen ist, dass die das Werkstück greifenden Zangen eine Bewegung des Werkstücks in Richtung eines Bearbeitungswerkzeuges bedingen, wenn eine Bearbeitung an der durch die Zangen gegriffenen Seitenkante durchgeführt wird.

Allerdings haben solche Bearbeitungsmaschinen den Nachteil, dass eine Bearbeitung des Werkstücks an den durch die Zangen gegriffenen Bereichen der Seitenkante nicht durchführbar ist bzw. die Zangen jeweils versetzt werden müssen. Weiter erweisen sich die Zangen als hinderlich bei der Steuerung der Bearbeitungsaggregate. Somit können nicht alle vom Kunden gewünschten Bearbeitungsverfahren realisiert werden.

Die EP 1 712 337 A1 offenbart ein Bearbeitungszentrum, in welchem Werkstücke, um von allen sechs Seiten bearbeitet zu werden, umpositioniert und/oder gedreht werden.

Die WO 92/12816 offenbart eine Bearbeitungsmaschine, bei welcher Klemmelemente zusammenwirken, um das Werkstück innerhalb der Bearbeitungsmaschine zur sechsseitigen Bearbeitung zu übergeben.

### Inhalt der Erfindung

Aufgabe der vorliegenden Erfindung ist es, eine Bearbeitungsmaschine bereitzustellen, mit deren Hilfe eine Bearbeitung an allen sechs Seiten eines Werkstücks durchgeführt werden kann. Dabei sollen die Nachteile von Bearbeitungsmaschinen nach dem Stand der Technik vermindert und die Flexibilität einer solchen Bearbeitungsmaschine erhöht werden.

Grundgedanke der vorliegenden Erfindung ist es demnach, die Bearbeitung eines Werkstücks von allen sechs Seiten zu gewährleisten.

Diese Aufgabe wird durch eine Bearbeitungsmaschine gemäß Anspruch 1 gelöst. Weitere bevorzugte Ausgestaltungen finden sich in den beigefügten Unteransprüchen.

Der Erfindung liegt der Gedanke zugrunde, die Arbeitsteilung der einzelnen Bauteile in der Maschine derart weiterzubilden, dass alle Seiten eines Werkstücks bearbeitet werden. Zu diesem Zweck ist erfindungsgemäß vorgesehen, dass bei einer Bearbeitungsmaschine nach dem Oberbegriff von Anspruch 1 an zumindest einem Förderelement ein Bearbeitungsaggregat angebracht ist, und die Druckbalken während einer Bearbeitung eine Bewegung in Richtung des Bearbeitungswerkzeuges durchführen können. Hierdurch kann in besonderer Weise die Flexibilität der Bearbeitungsmaschine erhöht werden, indem eine Bearbeitbarkeit des Werkstücks von allen sechs Seiten her sichergestellt wird. Dies wird nicht lediglich durch das Vorsehen mindestens eines an bzw. entlang der Fördereinrichtung verfahrbaren Bearbeitungsaggregats erreicht. Vielmehr ermöglicht die erfindungsgemäße Ausgestaltung der Druckbalken, die zu bearbeitenden Werkstücke zumindest zeitweise mittels der Druckbalken zu greifen und für einen Bearbeitungsvorgang gegenüber dem an der Fördereinrichtung vorgesehenem Bearbeitungsaggregat zu verfahren.

Hierdurch wird im Ergebnis ermöglicht, dass die Werkstücke an jeder beliebigen Oberfläche bearbeitet werden können. Darüber hinaus ermöglicht die Erfindung auch eine deutliche Ausweitung der Bearbeitungsmöglichkeiten, da an der Fördereinrichtung unterschiedlichste Bearbeitungsaggregate vorgesehen werden können, die im Bedarfsfall zugeführt und ansonsten zurückgezogen sein können, so dass sie den übrigen Bearbeitungsbetrieb nicht stören.

Gemäß der Erfindung ist vorgesehen, dass an zumindest einem Förderelement ein Bearbeitungsaggregat und mindestens eine Greifeinrichtung angebracht ist. Durch diese Verknüpfung, die ggf. auch lösbar sein kann, wird zunächst die Konstruktion der Maschine deutlich vereinfacht. Darüber hinaus ergibt sich jedoch auch ein beschleunigter Betrieb der Maschine, da zügig und ohne lange Verfahrwege von einem Fördern oder Halten der Werkstücke auf ein Bearbeiten der Werkstücke umgeschaltet werden kann (und umgekehrt).

Ein Förderelement mit Greifeinrichtung kann dabei sowohl ein Förderelement sein, welches ein zu bearbeitendes Werkstück in die Bearbeitungsmaschine einführt oder welches ein zu bearbeitendes Werkstück aus der Bearbeitungsmaschine ausführt.. In diesem Zusammenhang können ferner zwei Förderelemente auf der Fördereinrichtung der Bearbeitungsmaschine mit Vorteil zusammenwirken. So kann z. B. während ein ausführseitiges Förderelement bei der Bearbeitung mitwirkt ein einführseitiges Förderelement bereits das nächste zu bearbeitende Werkstück zu der Bearbeitungsmaschine hin fördern. Während dem Ausfördern des bearbeiteten Werkstücks durch das ausführseitige Förderelement kann bereits das einführseitige Förderelement das nächste zu bearbeitende Werkstück in die Bearbeitungsmaschine einführen. Auf diese Weise kann die Bearbeitungsmaschine besonders effizient und mit einem Minimum an Stillstandzeit eingesetzt werden. Ferner können auch mehrere Förderelemente zusammenarbeiten, um beispielsweise besonders lange Werkstücke stabil zü fördern und zu halten.

In einer weiteren Ausführungsform ist es vorgesehen, dass zumindest ein Bearbeitungsaggregat und/oder zumindest ein Förderelement entlang zumindest einer Förderschiene der Fördereinrichtung geführt wird. In dieser Ausführungsform wird bei einfacher Konstruktion ein zügiger Materialfluss und Betriebsablauf gewährleistet und somit eine hohe Taktzeit erreicht.

Darüber hinaus kann gemäß einer Weiterbildung der Erfindung zumindest ein Bearbeitungsaggregat in zumindest einer Richtung bezüglich des entsprechenden Förderelements beweglich sein. Somit kann die Flexibilität der erfindungsgemäßen Bearbeitungsmaschine in besonderer Weise realisiert werden.

In einer Ausführungsvariante ist es bevorzugt, dass mindestens ein Bearbeitungsaggregat um zumindest eine Achse bezüglich des entsprechenden Förderelements drehbar ist. Dies ist unter anderem dann vorteilhaft, wenn es sich bei dem Bearbeitungsaggregat um ein Sägeaggregat oder dergleichen handelt. Auf diese Weise kann beispielsweise ein Eckenausklinken flexibel durchgeführt werden.

Zusätzlich zeichnet sich die Bearbeitungsmaschine gemäß einer Weiterbildung der Erfindung dadurch aus, dass mehrere Bearbeitungsaggregate und/oder Förderelemente unabhängig voneinander bewegt werden können. Somit können die Bearbeitungsaggregate bzw. Förderelemente an jeden Ort der Fördereinrichtung verfahren werden, ohne miteinander zu kollidieren. Dies gilt natürlich in dem Rahmen, dass die Förderelemente bzw. Bearbeitungsaggregate an einer Fördereinrichtung geführt werden. Alternativ können die Bearbeitungsaggregate sowie die Förderelemente abhängig voneinander bewegt werden, mit anderen Worten über einen gemeinsamen Antrieb verfügen oder gar gekoppelt sein. Für eine vollkommen unabhängige Bewegung können auch zwei Fördereinrichtungen vorgesehen sein.

Gemäß einer Weiterbildung der Erfindung weist mindestens ein Förderelement einen Kreuzschlitten auf, an dem mindestens ein Bearbeitungsaggregat und bevorzugt auch mindestens ein Zangenbacken der Greifeinrichtung eines Förderelements in zwei voneinander abweichenden Richtungen verfahrbar ist. Mittels des Kreuzschlittens kann somit eine Verfahrbewegung beispielsweise entlang der Fördereinrichtung und in einer Richtung senkrecht hierzu ausgeführt werden. Dies eröffnet bei einfacher Konstruktion vielfältige Bearbeitungsmöglichkeiten. Ferner können auf den Kreuzschlitten weitere Verfahrmöglichkeiten vorgesehen sein, beispielsweise dass mindestens ein Zangenbacken mittels eines (Pneumatik-)Zylinders in Bezug auf den Kreuzschlitten und somit ggf. das Bearbeitungsaggregat verfahren werden kann. Hierdurch kann beispielsweise eine geeignete Vorpositionierung der Zangenbacke(n) erfolgen.

Darüber hinaus zeichnet sich die erfindungsgemäße Bearbeitungsmaschine gemäß einer Weiterbildung der Erfindung dadurch aus, dass ein Werkstück mittels der Druckbalken mit einer vorbestimmten und frei einstellbaren Klemmkraft klemmbar ist. Die Klemmkraft kann dabei derart eingestellt werden, dass ein Werkstück zwar sicher für die Bearbeitung gehalten, jedoch nicht beschädigt wird.

In einer weiteren Ausführungsform zeichnet sich die erfindungsgemäße Bearbeitungsmaschine dadurch aus, dass die Greifeinrichtung Bolzen aufweist, an welchen Bolzen ein Werkstück ausgerichtet werden kann. Die Bolzen erstrecken sich dabei bevorzugt in Z-Richtung, und somit senkrecht zu den auszurichtenden Kanten eines plattenförmigen Werkstücks.

Die Greifeinrichtung kann dabei drei Bolzen aufweisen, bei denen eine alle Bolzen berührende Tangente an der zu einem Werkstück hinweisenden Seite eine Nulllinie definiert. Die Nulllinie ist somit die Linie entlang der Bolzen, an welcher ein Werkstück ausgerichtet wird. Auf diese Weise lässt sich mit minimalem konstruktiven Aufwand eine präzise Positionierung der Werkstücke erreichen.

Bevorzugt ist es darüber hinaus, dass die Greifeinrichtung mindestens eine Zange aufweist. Eine Zange weist dabei gängigerweise zwei Zangenbacken auf, mit denen ein Werkstück gegriffen und geklemmt werden kann. Die zuvor genannten Bolzen verlaufen dabei senkrecht zu den Innenflächen der Zangenbacken. Im Rahmen der Erfindung liegt es, dass bei einer solchen Zange entweder das Oberteil (oberer Zangenbacken) oder Unterteil (unterer Zangenbacken) beweglich ist, während das andere unbeweglich ist. Auch können beide Teile beweglich sein, also gemeinschaftlich den Öffnungsvorgang oder die Klemmbewegung durchführen.

Darüber hinaus kann an einem ein Bearbeitungsaggregat aufnehmenden Förderelement ein Stützelement vorgesehen sein, welches Stützelement eingerichtet ist, ein Werkstück während der Bearbeitung in einer vertikalen Richtung zu stützen. Denkbar ist an dieser Stelle eine ausklappbare Stützfläche. Diese Ausführungsform kann dann zum Einsatz kommen, wenn zu bearbeitende Werkstücke derart weit aus dem Klemmbereich der Druckbalken hervorstehen, dass während der Bearbeitung eine Abstützung sinnvoll oder gar erforderlich ist. Die Druckbalken führen eine Relativbewegung in Richtung des Werkstücks durch, während das zusätzliche Stützelement zum entsprechenden Förderelement unbeweglich ist.

Gemäß einer weiteren bevorzugten Ausführungsform ist mindestens ein Förderelement an der Längsseite des Maschinengestells zum Einführen des Werkstücks angeordnet und mindestens ein weiteres Förderelement an der Längsseite des Maschinengestells zum Ausführen des Werkstücks angeordnet, wobei bevorzugt das ausführseitige Förderelement das Bearbeitungsaggregat aufweist. Auf diese Weise ist es möglich, das Werkstück mit dem ausführseitigen Bearbeitungsaggregat zu bearbeiten und mit diesem Förderelement das Werkstück direkt nach der Bearbeitung aus der Bearbeitungsmaschine auszuführen. Während der Bearbeitung kann das einführseitige Förderelement bereits das nächste zu bearbeitende Werkstück zu der Bearbeitungsmaschine fördern. So wird eine optimale Auslastung der Bearbeitungsmaschine erreicht.

Zusätzlich zeichnet sich die Bearbeitungsmaschine gemäß einer Weiterbildung dadurch aus, dass die Greifeinrichtungen der Fördereinrichtung zum Halten oder Fixieren des Werkstücks zusammenwirken können. Dies ist besonders vorteilhaft bei langen oder bei übereinandergelegten Werkstücken, da auf diese Weise bei langen Werkstücken ein Verrutschen der Werkstücke in der Greifeinrichtung vermieden wird und bei übereinandergelegten Werkstücken ein Spalt, welcher durch das Greifen der Werkstücke mit einer Greifeinrichtung zwischen den Werkstücken entstehen kann, verhindert bzw. geschlossen wird. Dies ermöglicht besonders vorteilhaft eine exakte Bearbeitung der Werkstücke.

Bei der erfindungsgemäßen Bearbeitungsmaschine können unterschiedlichste Bearbeitungsaggregate einzeln und in Kombination zum Einsatz kommen. Insbesondere kann es sich um Aggregate zum Herstellen und Veredeln von Werkstücken handeln, die zumindest abschnittsweise aus Holz, Holzwerkstoffen, Kunststoff oder dergleichen bestehen. Gemäß einer Weiterbildung der Erfindung ist dabei vorgesehen, dass mindestens ein Bearbeitungsaggregat ausgewählt ist aus der Gruppe bestehend aus Bearbeitungsaggregat für formgebende, insbesondere spanende Bearbeitung, Montageaggregat zum Montieren von Bauteilen an dem Werkstück, Beschichtungsaggregat, insbesondere Kantenanleimaggregat, und Kantennachbearbeitungsaggregat.

Um einen möglichst flexiblen und gleichzeitig zügigen und störungsfreien Betrieb der Bearbeitungsaggregate zu ermöglichen, ist gemäß einer Weiterbildung der Erfindung ist vorgesehen, dass die Bearbeitungsvorrichtung mindestens ein Magazin für Bearbeitungsaggregate und/oder für Bauteile zur Versorgung von Bearbeitungsaggregaten aufweist. Dabei ermöglicht ein Magazin für Bearbeitungsaggregate eine hohe Flexibilität der Bearbeitung bei einfacher Konstruktion, da die Bearbeitungsaggregate je nach Bedarf aus dem Magazin entnommen und beispielsweise auf ein Förderelement gesetzt bzw. automatisch "eingewechselt" werden können. Ein Magazin für Bauteile zur Versorgung von Bearbeitungsaggregaten ermöglicht einen zügigen und störungsfreien Betrieb, wobei es sich bei den Bauteilen beispielsweise um Beschläge, Beschichtungsmaterial wie Kantenmaterial, Dübel, etc. handeln kann.

### Kurze Beschreibung der Figuren

- Fig. 1a: zeigt eine Ausführungsform der erfindungsgemäßen Bearbeitungsmaschine in einer Schnittansicht. Dabei ist als Bearbeitungswerkzeug ein Bohraggregat gezeigt.
- Fig. 1b: entspricht der in Fig. 1a gezeigten Bearbeitungsmaschine während der Bearbeitung eines Werkstücks.
- Fig. 2a: zeigt eine Ausführungsform der erfindungsgemäßen Bearbeitungsmaschine in einer Schnittansicht. Im Vergleich zu Fig. 1a und 1b ist allerdings als Bearbeitungswerkzeug ein Sägeaggregat vorgesehen.
- Fig. 2b: entspricht der in Fig. 2a gezeigten Bearbeitungsmaschine während der Bearbeitung eines Werkstücks.
- Fig. 3: zeigt die Fördereinrichtung der erfindungsgemäßen Bearbeitungsmaschine.
- Fig. 4: veranschaulicht eine beispielhafte Verfahrensvariante, bei der ein Bohraggregat zur Bearbeitung eines Werkstücks verwendet wird. Dabei ist der Verfahrensablauf in einer schematischen Draufsicht anhand der Schritte a) - k) dargestellt.
- Fig. 5: veranschaulicht eine weitere Verfahrensvariante in einer schematischen Draufsicht, bei der ein Sägeaggregat zum Einsatz kommt. Es werden gegenüber der Fig. 4 alternative Schritte a) - k) dargestellt.
- Fig. 6: illustriert die Verwendung eines Fräsers im Rahmen einer Bearbeitung mit der erfindungsgemäßen Bearbeitungsmaschine in einer schematischen Draufsicht.
- Fig. 7: zeigt eine erfindungsgemäße Bearbeitungsmaschine in einer schematischen Darstellung mit einer Station zum Veredeln einer Schmalfläche eines Werkstücks.

### Beschreibung bevorzugter Ausführungsformen

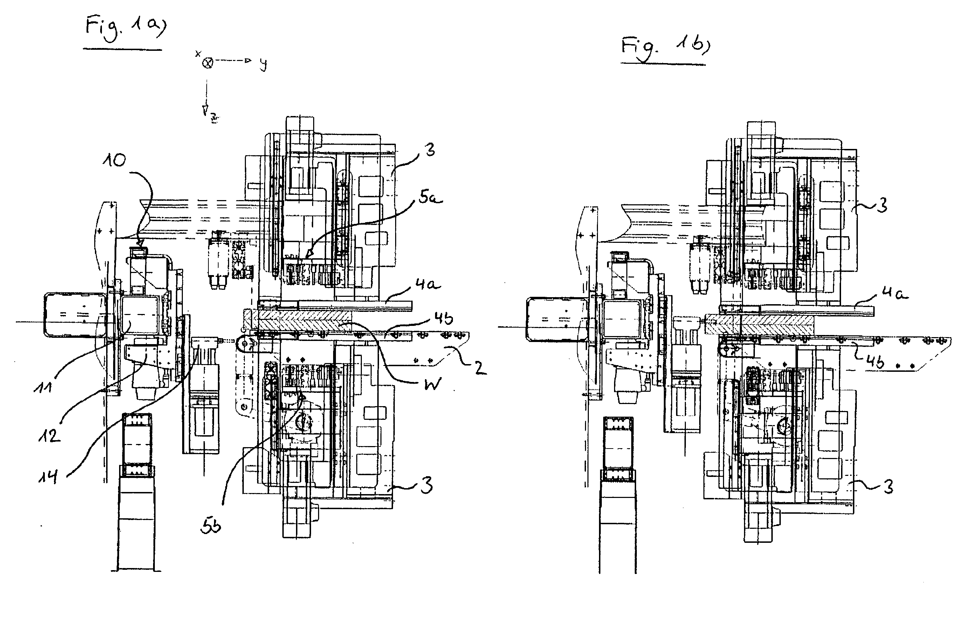

Fig. 1 zeigt eine Bearbeitungsmaschine in einer Schnittansicht. An diesem Maschinengestell ist eine Einheit 3 angebracht, die hinsichtlich des Maschinengestells in Y-Richtung verfahrbar ist. An der Einheit 3 wiederum ist ein oberer Druckbalken 4a und ein unterer Druckbalken 4b vorgesehen, die jeweils in Z-Richtung beweglich sind. Mit Hilfe dieser Druckbalken 4a, 4b kann ein Werkstück W - oder auch mehrere Werkstücke - geklemmt und gehalten werden.

Die Einheit 3 nimmt weiter verschiedene Bearbeitungswerkzeuge 5a und 5b auf, und zwar jeweils eine Gruppe von Bearbeitungswerkzeugen 5a im Bereich oberhalb des Druckbalkens 4a, und eine weitere Gruppe von Bearbeitungswerkzeugen 5b im Bereich unterhalb des Druckbalkens 4b.

Zwischen den beiden Druckbalken 4a, 4b ist in Fig. 1a ein Werkstück W im geklemmten Zustand gezeigt. Weiter ist in Fig. 1a eine an der Längsseite des Maschinengestells angeordnete Fördereinrichtung 10 zu sehen (senkrecht zur Ansicht von Fig. la). Die Fördereinrichtung 10 weist eine Förderschiene 11 auf, an welcher Förderschiene 11 ein Förderelement/Schlitten 12 geführt wird. Das Förderelement 12 ist somit entlang der X-Achse auf der Förderschiene 11 verfahrbar.

In den Figuren 1a und 1b ist am Förderelement 12 ein Bohraggregat 14 angebracht. Dieses Bohraggregat 14 ist hinsichtlich des Förderelements 12 entlang der Z-Achse verfahrbar. Es sei an dieser Stelle angemerkt, dass der Antrieb mehrerer Förderelemente 12 zur Bewegung entlang der Förderschiene 11 jeweils einzeln, oder aber für alle Förderelemente gemeinsam erfolgen kann.

Das Bohraggregat 14 befindet sich in Fig. 1a in einer Situation, in der das Bohraggregat 14 noch nicht zur Bearbeitung bereit ist. Das Bohraggregat 14 muss zur Bearbeitung, wie in Fig. 1b dargestellt, in eine entsprechende Position entlang der Z-Achse verfahren werden. Ist das Bohraggregat nun in einer entsprechenden Bearbeitungsposition, so wird das Werkstück W in Richtung des Bohraggregats 14 bewegt. Dies geschieht dadurch, dass die Einheit 3 horizontal (Y-Achse) in Richtung des Bohraggregats 14 bewegt wird. Durch diese Bewegung kommt das mittels der Druckbalken 4a, 4b geklemmte Werkstück W mit dem Bohraggregat 14 in Eingriff. Während der Bearbeitung wird der Vorschub mittels der Bewegung der Einheit 3 definiert. Ist die Bearbeitung dann abgeschlossen, so bewegt sich die Einheit 3 wiederum in der entgegen gesetzten Richtung vom Bohraggregat 14 weg.

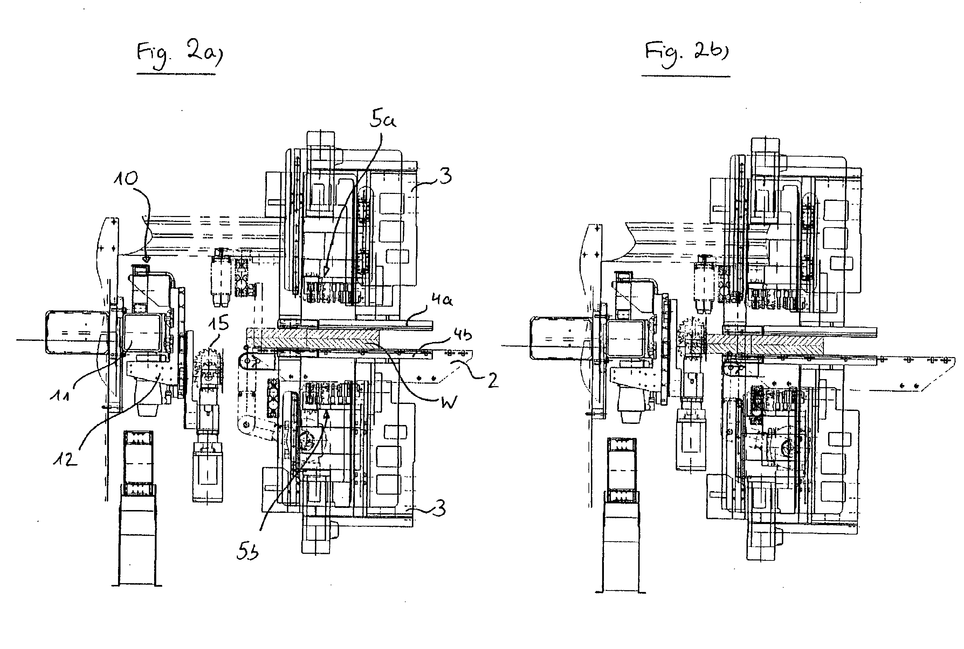

Figuren 2a und 2b sind zu den Fig. 1a und 1b entsprechende Darstellungen, wobei anstelle des Bohraggregats 14 ein Sägeaggregat 15 zu sehen ist. Dieses Sägeaggregat 15 ist wie das Bohraggregat 14 an einem Förderelement 12 angebracht. Das Sägeaggregat 15 hat, wie später genauer beschrieben, die zusätzliche Eigenschaft, dass es um zumindest eine weitere Achse schwenkbar ist.

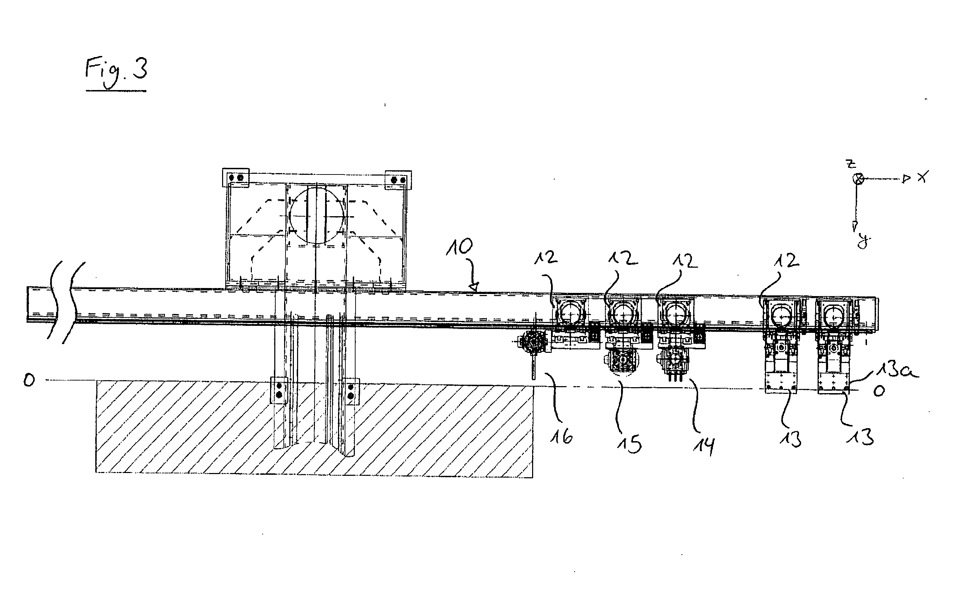

Fig. 3 zeigt eine Draufsicht der Fördereinrichtung 10, an der verschiedene Förderelemente 12 an der Förderschiene 11 angebracht sind. Die verschiedenen Förderelemente 12 sind weiter zum einen mit Zangen 13 versehen, welche Zangen 13 jeweils drei Bolzen 13a aufweisen. Diese Bolzen 13a erstrecken sich in Z-Richtung und sind derart angeordnet, dass eine an die Bolzen 13a angelegte Tangente eine zur Fördereinrichtung 10 parallele Nulllinie 0 definiert.

An weiteren Förderelementen 12, die ebenfalls auf der Förderschiene 11 geführt werden, sind ein Bohraggregat 14, ein Sägeaggregat 15 so wie ein Fräsaggregat 16 angebracht. Alle in Fig. 3 dargestellten Förderelemente 12 sind entlang der Förderschiene 11 unabhängig voneinander in X-Richtung verfahrbar.

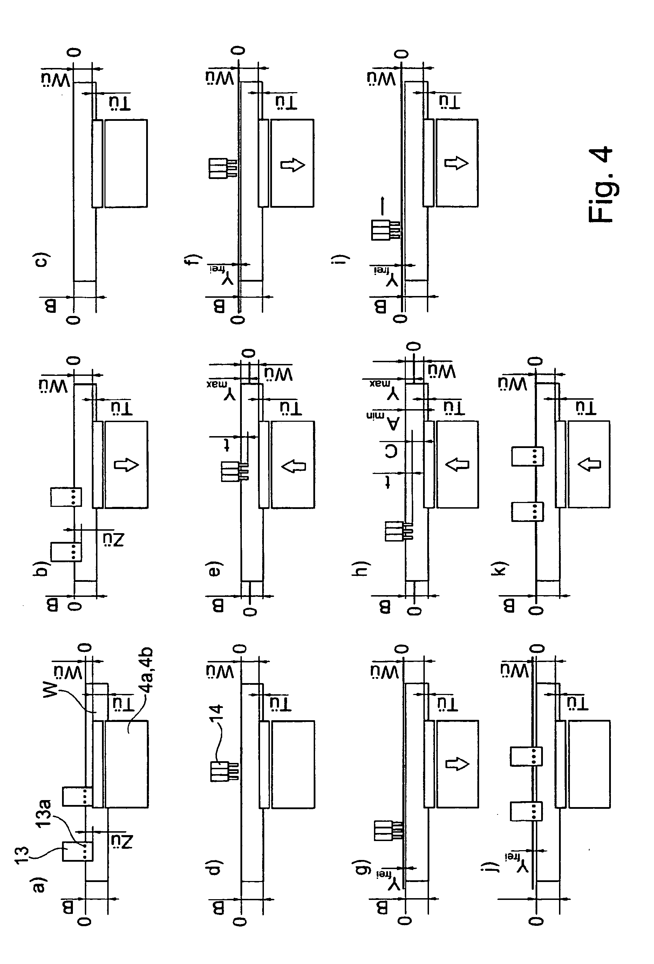

In Fig. 4 ist das horizontale Bohren als eine Verfahrensvariante in einzelnen Bearbeitungsschritten dargestellt.

Nachdem das Werkstück in den Bearbeitungsraum geführt wurde, befindet es sich in der im Schritt a) von Fig. 4 dargestellten Situation. Dabei ist die Nulllinie 0 zu sehen, welche sich entlang einer Seite der in den Zangen befindlichen Bolzen erstreckt, wobei das Werkstück W mittels der Bolzen entlang der Nulllinie 0 ausgerichtet werden kann.

Das Werkstück W mit der Werkstücksbreite B ist also im Bereich des Zangenüberstandsmaß Zü von einer Seite her durch die Zangen gegriffen. Weiter sind in der Draufsicht bewegliche Druckbalken 4a und 4b zu erkennen, mittels derer das Werkstück W von oben und unten geklemmt werden kann. In der im Schritt a) von Fig. 4 dargestellten Situation befinden sich die Druckbalken 4a, 4b von der Nulllinie 0 aus gesehen in einem Werkstücküberstandsmaß Wü. Das Zangenüberstandsmaß Zü ist dabei kleiner als das Werkstücküberstandsmaß Wü, so dass die Zangen nicht mit den Druckbalken kollidieren. Von der gegenüberliegenden Seite ist das Tischüberstandsmaß Tü angezeigt.

Befindet sich nun das Werkstück 1, wie im Schritt a) gezeigt, in einem Bearbeitungsraum, so werden die Druckbalken 4a und 4b, wie im Schritt b) von Fig. 4 durch den Pfeil angedeutet, von der Nulllinie 0 weg bewegt. Dies hat zur Folge, dass sich das Tischüberstandsmaß Tü verringert, während das Werkstücküberstandsmaß Wü vergrößert wird. Anschließend wird das Werkstück W mittels der Druckbalken 4a, 4b im Bereich des Tischüberstandsmaß Tü geklemmt.

Im nächsten Schritt c) von Fig. 4 werden die Zangen 13 aus dem Bearbeitungsraum heraus bewegt und in die sogenannte Parkposition (nicht gezeigt) verfahren. Das Werkstück wird nun lediglich im Bereich der Druckbalken 4a, 4b geklemmt gehalten. Obwohl dies in Schritt c) von Fig. 4 nicht explizit gezeigt ist, kann das Werkstück durch eine Bewegung der Druckbalken 4a, 4b bereits an dieser Stelle um die später beschriebene Freifahrung Y_{frei} von der Nulllinie 0 wegbewegt werden.

Im darauffolgenden Schritt d) wird nun ein Bearbeitungswerkzeug, in diesem Fall ein Bohraggregat 14, in den Bereich des Bearbeitungsraumes geführt.

Für den nächsten Bearbeitungsschritt e) wird das Werkstück W mit Hilfe einer horizontalen Hubbewegung der Druckbalken 4a, 4b in Richtung des Bohraggregats 14 bewegt. Dabei dringt das Bohraggregat 14 um die Bohrtiefe t in das Werkstück W ein. Der maximale Hub der Druckbalken in Richtung des Bohraggregats 14 wird durch die Größe Yₘₐₓ von der Nulllinie aus gesehen definiert. Somit wird sichergestellt, dass lediglich der Bohrer des Bohraggregats 14 in das Werkstück eindringt, das Werkstück jedoch nicht das Bohraggregat 14 berührt.

Im nächsten Bearbeitungsschritt f) von Fig. 4, also nach Beendigung des Bohrvorgangs, wird das Werkstück W durch einen Hub der Druckbalken 4a, 4b wieder vom Bohraggregat 14 entfernt. Der in diesem Arbeitsschritt durchgeführte Hub fördert das Werkstück in die sogenannte Freifahrposition. Die Freifahrposition ist dadurch gekennzeichnet, dass das Werkstück von der Nulllinie 0 um eine bestimmte Größe vom Bohraggregat 14 entfernt liegt. Dieser Differenzwert von der Nulllinie 0 wird als Freifahrung Y_{frei} bezeichnet.

Auf diese Weise kann sichergestellt werden, dass sich das Bohraggregat 14 im nächsten Schritt j) von Fig. 4 gefahrlos entlang der Längskante des Werkstücks W bewegen lässt. Ist das Bohraggregat 14, wie im Schritt j) dargestellt, an einer weiteren Bearbeitungsstelle positioniert, so kann, wie im Schritt h) gezeigt, ein weiterer Arbeitsschritt durchgeführt werden. Dabei wird das Werkstück W wiederum mit Hilfe eines Hubs der Druckbalken 4a, 4b in Richtung des Bohraggregats 14 bewegt. Der im Schritt h) gezeigte Bohrtakt entspricht weitestgehend dem in Schritt e) von Fig. 4 gezeigten. Anschließend werden die Druckbalken 4a, 4b mit dem geklemmten Werkstück W wiederum vom Bohraggregat 14 weg bewegt, und zwar auf die bereits im Zusammenhang mit Schritt f) beschriebene Freifahrposition. Das Bohraggregat bewegt sich, wie im Schritt i) durch den Pfeil angedeutet, aus dem Bearbeitungsraum heraus.

Im nächsten Schritt wiederum werden die Zangen 13 in den Bearbeitungsraum geführt, wobei die Bolzen jeder Zange so ausgerichtet sind, dass die zum Werkstück W hin weisende Seite der Bolzen auf der Nulllinie 0 liegt. Die Zangen können deshalb gefahrlos am Werkstück vorbei geführt werden, weil dieses sich in der Freifahrposition befindet, mit anderen Worten der Abstand Y_{frei} zwischen Werkstückkante und Nulllinie 0 gegeben ist. Im abschließenden dargestellten Schritt k) wird das Werkstück W mit Hilfe eines Hubs der Druckbalken 4a, 4b in Richtung der Zangen bewegt, so dass die Längskante des Werkstücks gegen die Bolzen der Zangen anliegt. Demnach ist das Werkstück nun entlang der Nulllinie 0 ausgerichtet. Abschließend wird die Klemmung der Druckbalken 4a, 4b gelöst, nachdem die Zangen 13 das Werkstück W gegriffen haben. Somit kann das Werkstück W aus dem Bearbeitungsraum heraustransportiert werden.

Als weitere Alternative soll nun eine Verfahrensvariante beschrieben werden, bei der statt des Bohraggregats 14 ein Sägeaggregat 15 zur Bearbeitung des Werkstücks W verwendet wird.

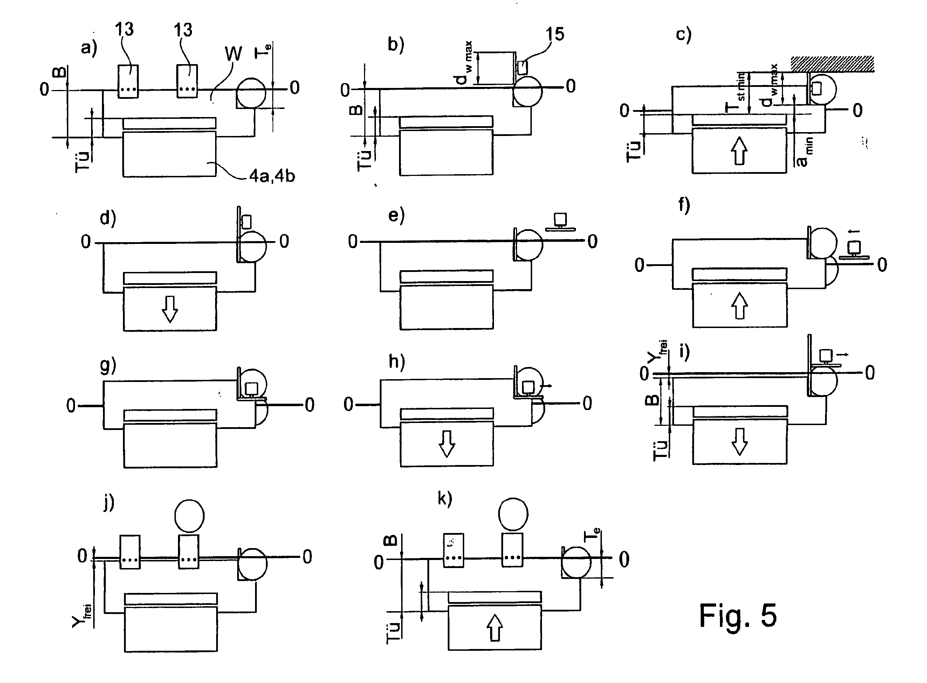

Fig. 5 zeigt einen Schritt a), bei dem das Werkstück W im Bearbeitungsraum von den Zangen 13 an die Druckbalken 4a, 4b übergeben wird. Dabei klemmen die Druckbalken 4a, 4b im Bereich des Tischüberstandsmaß Tü das Werkstück W, wonach die Zangen 13 gelöst und anschließend aus dem Bearbeitungsraum herausgefahren werden. Ziel des in den Schritten a) - k) von Fig. 5 dargestellten Verfahrens ist das sogenannte Eckenausklinken. Dabei soll eine z.B. durch ein Fräsaggregat erzeugte Ausfräsung mittels eines Sägeaggregats eine rechtwinklige Gestalt annehmen. Die im Schritt a) von Fig. 5 dargestellte Ausklinktiefe ist hierbei zu beachten.

Im Schritt b) von Fig. 5 befinden sich die Zangen 13 in der Parkposition, und das Sägeaggregat 15 wurde in den Bearbeitungsbereich bewegt. Das Sägeaggregat ist senkrecht zur Werkstücklängsseite ausgerichtet. Sobald sich das Sägeaggregat 15 wie gezeigt in der Position befindet, in welcher der Bearbeitungsschritt durchgeführt werden soll, wird mit Hilfe der Druckbalken 4a, 4b ein Bearbeitungshub in Richtung des Sägeaggregats 15 durchgeführt (Schritt c) von Fig. 5). Dabei dringt das Sägeblatt in das Werkstück W ein.

Das Bearbeitungsergebnis ist dann dem darauffolgenden Schritt d) zu entnehmen. Dabei wurde das Werkstück W mittels einer Hubbewegung der Druckbalken 4a, 4b vom Sägeaggregat 15 weg bewegt, so dass der bearbeitete Bereich frei liegt.

Im weiteren Schritt e) von Fig. 5 wird das Sägeaggregat in X-Richtung neu positioniert und um die Z-Achse geschwenkt, so dass das Sägeblatt entlang der Längskante des Werkstücks W, oder mit anderen Worten parallel zur Nulllinie verläuft. Im nächsten Schritt f) wird nun ein Bearbeitungsschritt dargestellt, bei dem das Sägeblatt einen Schnitt in X-Richtung durchführen soll. Dazu wird zuerst das Werkstück in Y-Richtung in eine Bearbeitungsposition positioniert. Der Bearbeitungshub in dieser Variante wird dann vom Sägeaggregat 15 selbst durchgeführt. Dazu wird das Sägeaggregat 15 in X-Richtung parallel zur Nulllinie 0 auf das Werkstück W zu geführt.

Im Schritt g) befindet sich das Sägeaggregat 15 im vollen Eingriff mit dem Werkstück W, im nächsten Schritt h) wird das Sägeaggregat parallel zur Nulllinie 0 vom Werkstück W weg bewegt. Weiter ist eine Rückhubbewegung der Druckbalken 4a, 4b mit Hilfe des im Schritt h) zu erkennenden Pfeils angedeutet.

Die Rückhubbewegung der Druckbalken wird derart durchgeführt, dass die von den Druckbalken entfernt gelegene Längsseite des Werkstücks W um das sogenannten Freifahrung Y_{frei} von der Nulllinie 0 entfernt liegt (Schritt i) von Fig. 5). Anschließend wird das Sägeaggregat 15 aus dem Bearbeitungsraum heraus geführt.

Sind nun die gewünschten Bearbeitungsschritte durchgeführt worden, so werden die Zangen aus der Parkposition in den Bearbeitungsraum geführt und wie im Schritt j) von Fig. 5 dargestellt positioniert. Eine freie Beweglichkeit der Zangen ist aufgrund des Freifahrung Y_{frei} möglich. Abschließend wird nun das Werkstück W durch eine Hubbewegung der Druckbalken 4a, 4b in Richtung der Zangen 13 bewegt und an den Bolzen der Zange ausgerichtet. Somit befindet sich nun eine Längsseite des Werkstücks W entlang der Nulllinie.

Es sei an dieser Stelle angemerkt, dass außer der dargestellten Schwenkbewegung des Sägeaggregats 15 um 90°, auch eine Schwenkbewegung in der anderen 90°-Richtung möglich ist. Mit anderen Worten ist das Sägeaggregat um zumindest 180° schwenkbar. Auf diese Weise kann nicht nur, wie dargestellt, eine Ecke an einer rechten Seite des Werkstücks ausgeklinkt werden, sondern ebenfalls eine linke Seite. Die rechte bzw. linke Seite beschreibt dabei die entsprechenden Seiten des Werkstücks in der Draufsicht.

Weiter sei darauf aufmerksam gemacht, dass das dargestellte Eckenausklinken zwar rechtwinklige Eckenprofile betrifft, durch die stufenlose Schwenkbarkeit des Sägeaggregats 15 aber auch andere Winkel möglich sind.

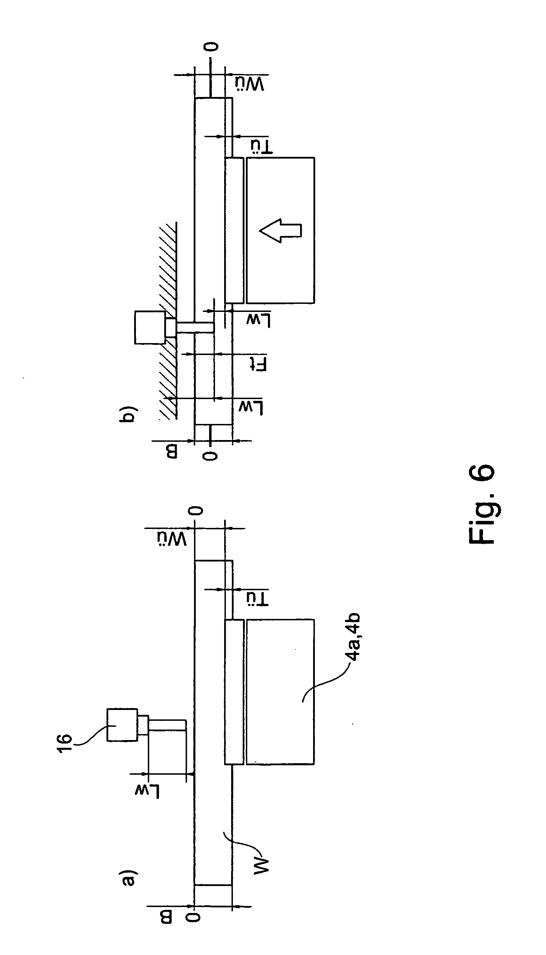

In den in Fig. 6 dargestellten Schritten a) und b) wird nun die Bearbeitung des Werkstücks W mittels eines Fräsaggregats 16 erläutert. Bezüglich weiterer Arbeitsschritte sei auf die Figuren 4 und 5 verwiesen. Die Bearbeitungsschritte sind hier beispielhaft aufgeführt, da die Fräserlänge meist größer ist als die eines in Fig. 4 dargestellten Bohraggregats 14.

Das Werkstück mit der Werkstückbreite B ist im Bereich des Tischüberstandsmaß Tü mit Hilfe der Druckbalken 4a, 4b geklemmt. Eine Längsseite des Werkstücks W ist entlang der Nulllinie 0 ausgerichtet, wobei der Abstand von dieser Längsseite des Werkstücks W zu den Druckbalken 4a, 4b als Werkstücküberstandsmaß Wü definiert ist. Der Fräser selbst weist die Fräseraufspannlänge Lb auf. Um das Werkstück nun bearbeiten zu können, wird, wie in Schritt e) von Fig. 4 gezeigt, ein Hub der Druckbalken 4a, 4b in Richtung des Fräsaggregats 16 durchgeführt. Dabei ergibt sich, wie im Schritt b) von Fig. 6 zu sehen, eine Frästiefe Ft gegenüber der einen Längsseite des Werkstücks W. Die Steuerung der Bearbeitungsmaschine verhindert im dargestellten Verfahrenschritt, dass die Fräserspitze bis in den Bereich der Druckbalken (Tischüberstandsmaß Tü) vordringt. Grundsätzlich kann der Fräser allerdings in den Bereich zwischen den Druckbalken vordringen. Sichergestellt sein muss lediglich, dass der Fräser nicht mit den Druckbalken 4a, 4b in Kontakt kommt und diese beschädigt.

Bezugnehmend auf die Figuren 4-6 könnte ein Verfahren zur Bearbeitung von bevorzugt plattenförmigen Werkstücken in einem Bearbeitungsraum die folgenden Schritte aufweisen:
Klemmen eines mittels einer verfahrbaren Greifeinrichtung 13 gegriffenen Werkstücks W im Bearbeitungsraum mittels einem oberen und einem unteren Druckbalken 4a, 4b, wobei die Greifeinrichtung 13 bevorzugt zumindest eine Zange aufweist,
Öffnen der Greifeinrichtung 13 und Fördern der Greifeinrichtung 13 aus dem Bearbeitungsraum heraus (Parkposition),
Bearbeiten des Werkstücks W mittels eines Bearbeitungswerkzeuges 14, 15, 16,
Fördern der Greifeinrichtung 13 in den Bearbeitungsraum und Greifen des Werkstücks W,
Lösen der Druckbalken 4a, 4b und Ausfördern des Werkstücks mittels der Greifeinrichtung 13.

Bevorzugt zeichnet sich ein Verfahren zur Bearbeitung von bevorzugt plattenförmigen Werkstücken dadurch aus, dass das Werkstück W vor dem Klemmen gegenüber den Druckbalken 4a, 4b derart ausgerichtet wird, damit von einer Seite des Werkstücks W aus ein Werkstücküberstandsmaß größer ist als ein Zangenüberstandsmaß, so dass die Greifeinrichtung 13 nicht mit den Druckbalken 4a, 4b in Berührung kommt.

Weiter kann es vorgesehen sein, dass zur Bearbeitung ein Bearbeitungswerkzeug 14, 15, 16 innerhalb des Werkstücküberstandsmaßes am Werkstück W angreift, wobei die Bearbeitung bevorzugt eine spanende Bearbeitung ist.

In einer Ausführungsvariante ist es bevorzugt, dass die Druckbalken 4a, 4b nach Beenden eines Arbeitsschrittes eine Bewegung entgegen dem Bearbeitungswerkzeug 14, 15, 16 durchführen, wobei bevorzugt eine zusätzliche Freifahrung zwischen dem Werkstück W und der Greifeinrichtung 13 freigelassen wird.

In einer weiteren Ausführungsform ist es vorgesehen, dass die Druckbalken 4a, 4b nach Ende der Bearbeitung eine Bewegung in Richtung der Greifeinrichtung 13 durchführen, damit das Werkstück W von der Greifeinrichtung 13 aufgenommen werden kann.

In einem derartigen Verfahren können die Druckbalken 4a, 4b das Werkstück W gegen einen in der Greifeinrichtung 13 vorgesehenen Anschlag 13a bewegen und es daran ausrichten.

Darüber hinaus ist es bevorzugt, dass nach Ende der Bearbeitung das Bearbeitungswerkzeug 14, 15, 16 in eine Parkposition fährt, in der das Bearbeitungswerkzeug 14, 15, 16 nicht mit der Greifeinrichtung 13 oder dem Werkstück W in Berührung kommen kann.

Die in den Verfahrensvarianten beschriebenen Bearbeitungsverfahren werden hier lediglich beispielhaft aufgeführt. Auch weitere spanende oder auch spanlose Bearbeitungsverfahren sind mit Hilfe der erfindungsgemäßen Vorrichtung denkbar. Auch können die Größe und die Ausgestaltung der verwendeten Bearbeitungswerkzeuge variieren.

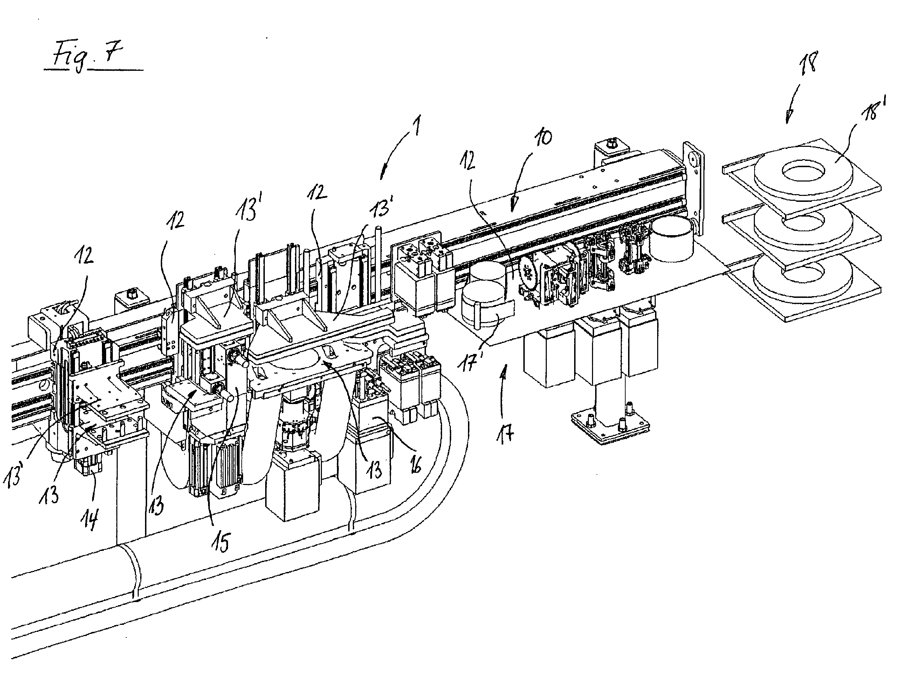

Fig. 7 zeigt eine weitere bevorzugte Ausführungsform der erfindungsgemäßen Bearbeitungsmaschine 1. Diese zeichnet sich zunächst dadurch bei welcher ein ausführseitiges Förderelement 12 eine Station 17 zum Veredeln einer schmalen Seitenfläche eines Werkstücks W aufweist. Genauer gesangt handelt es sich bei der Station 17 in der vorliegenden Ausführungsform um eine Kantenanbringstation zum Anbringen eines Kantenmaterials 17' an eine Schmalfläche eines Werkstücks. Mittels dieser Station 17 ist es möglich, eine Kante, insbesondere eine Dekor- und/oder eine Stützkante, auf eine schmale Seitenfläche eines Werkstücks W aufzubringen und diese Kante anschließend mittels bekannter Bearbeitungsverfahren nachzubehandeln bzw. zu veredeln. Um die Station 18 mit verschiedenen Kantenmaterialien versorgen zu können, ist ferner ein Kantenmagazin 18 vorgesehen, in welchem mehrere Kantenmaterialrollen 18' vorgehalten werden können, um diese nach Bedarf in die Station 17 einzuwechseln. Alternativ oder zusätzlich kann das Magazin 18 auch mit anderen Verbrauchsmaterialien und ggf. auch einwechselbaren Bearbeitungsaggregaten bestückt werden. Ferner kann beispielsweise für Bearbeitungsaggregate auch ein zusätzliches Magazin vorgesehen sein.

Die Kantenanbringstation 17 kann auf unterschiedlichsten Fügetechnologien basieren, beispielsweise einer herkömmlichen Kantenanleimtechnik unter Einsatz von Schmelzkleber. Darüber hinaus können jedoch auch Fügetechniken zum Einsatz kommen, bei denen beispielsweise ein Laser oder eine andere geeignete Energiequelle verwendet wird, um ein auf der Kante oder dem Werkstück vorhandenes Haftmittel zu aktivieren oder überhaupt erst zu bilden. Ferner kann die Kantenanbringstation 17 geeignete Nachbearbeitungsaggregate mit sich führen wie beispielsweise ein Bündigfräsaggregat, eine Ziehklinge oder auch eine Bemusterungseinheit (z.B. eine Tintenstrahldruckeinheit) zum Bemustern des Kantenmaterials.

Ferner weist die in Fig. 7 gezeigte Bearbeitungsmaschine 1 neben der Kantenanbringstation 17 drei weitere Bearbeitungsaggregate 14, 15 und 16 auf, die jeweils auf einem Förderelement 12 angeordnet sind. Dabei sind die Förderelemente 12 jeweils als Kreuzschlitten ausgebildet, sodass die Bearbeitungsaggregate entlang der Fördereinrichtung 10 und in einer Richtung senkrecht hierzu (unabhängig voneinander) verfahrbar sind. Darüber hinaus ist in der vorliegenden Ausführungsform auch jeweils ein oberer Zangenbacken der Greifeinrichtungen 13 mit dem jeweiligen Bearbeitungsaggregat 14, 15 bzw. 16 gekoppelt, sodass diese gemeinsam in vertikaler Richtung verfahrbar sind. Auf diese Weise kann mittels eines einzigen Verfahrantriebes eine Doppelfunktion erfüllt werden, nämlich eine Verstellbarkeit der Aggregate und ein Spannen der Werkstücke mittels der Greifeinrichtung 13. Für bestimmte Anwendungszwecke kann es darüber hinaus jedoch sinnvoll sein, eine weitere Verstellmöglichkeit des oberen Zangenbackens in Bezug auf das jeweilige Bearbeitungsaggregat 14, 15 bzw. 16 vorzusehen, beispielsweise mittels eines pneumatischen Stellzylinders.

Wie in Fig. 7 ferner zu erkennen ist, sind die oberen Zangenbacken 13' der Greifeinrichtungen 13 teilweise ineinandergreifen angeordnet. Auf diese Weise kann beispielsweise das mittlere Zangenbackenpaar (das dem Bearbeitungsaggregat 15 zugeordnet ist) eine Stütz- und Führungsfunktion des jeweiligen Werkstücks erfüllen, während eines der Bearbeitungsaggregate 14 und 16 eine Bearbeitung durchführt. Auch der umgekehrte Fall ist möglich.

Die in Fig. 7 gezeigte Ausführungsform der erfindungsgemäßen Bearbeitungsmaschine 1 verdeutlicht besonders, dass im Rahmen der vorliegenden Erfindung vorteilhaft unterschiedlichste Bearbeitungsaggregate kombiniert werden können. Auf diese Weise ermöglicht die vorliegende Erfindung nicht nur eine sogenannte sechsseitige Bearbeitung der Werkstücke, sondern es werden auch völlig neue Möglichkeiten hinsichtlich der Art der Bearbeitungen geschaffen. Insbesondere können im Rahmen der Erfindung beispielsweise formgebende (bevorzugt spanende) Bearbeitungsaggregate zum Einsatz kommen, wie beispielsweise Bohrer, Fräser, Sägen und dergleichen. Eine weitere Hauptgruppe bevorzugter Bearbeitungsaggregate sind Montageaggregate zum Montieren von Bauteilen an dem Werkstück, wie beispielsweise Beschlagsetzaggregate, Dübelsetzaggregate (gegebenenfalls mit Verleimtechnik) und dergleichen. Ferner können vorteilhaft Beschichtungsaggregate zum Einsatz kommen, wie beispielsweise Kantenanleimaggregate oder allgemein Kaschieraggregate. Zu möglichen Beschichtungsaggregaten zählen jedoch auch Druck- und Lackieraggregate. Schließlich sind auch Kanten- bzw. Beschichtungsmaterialnachbearbeitungsaggregate als mögliche Bearbeitungsaggregate zu nennen, wie beispielsweise Bündigfräsaggregate, Ziehklingen, Kappaggregate und dergleichen. Diese können gegebenenfalls mit einem Beschichtungsaggregat integriert sein.

## Patentansprüche

1. Bearbeitungsmaschine (1) zum Bearbeiten von bevorzugt plattenförmigen Werkstücken in einem Bearbeitungsraum, wobei die Bearbeitungsmaschine aufweist:
ein Maschinengestell,
eine am Maschinengestell beweglich angeordnete Einheit (3), welche Einheit (3) einen oberen und einen unteren Druckbalken (4a, 4b) zum Führen und Halten eines Werkstücks aufweist,
eine an einer Längsseite des Maschinengestells angeordnete Fördereinrichtung (10), wobei an der Fördereinrichtung (10) zumindest ein Förderelement (12) geführt wird,
eine Greifeinrichtung (13) zum Greifen des Werkstücks,
bevorzugt zwei Zangen, welche an zumindest einem Förderelement (12) angebracht ist, und
wobei an zumindest einem Förderelement (12) ein Bearbeitungsaggregat (14, 15, 16, 17) angebracht ist,
**dadurch gekennzeichnet, dass**
die ein Werkstück haltenden Druckbalken (4a, 4b) während einer Bearbeitung mittels des Bearbeitungsaggregats (14, 15, 16, 17) eine Bewegung in Richtung des Bearbeitungsaggregats (14, 15, 16, 17) durchführen können, und
die Einheit (3) obere und untere zur Bearbeitung des Werkstücks ausgebildete Bearbeitungswerkzeuge (5a, 5b) aufweist.

2. Bearbeitungsmaschine (1) gemäß Anspruch 1, **dadurch gekennzeichnet, dass** zumindest ein Förderelement (12) entlang zumindest einer Förderschiene (11) der Fördereinrichtung (10) geführt wird.

3. Bearbeitungsmaschine (1) gemäß einem der Ansprüche 1 oder 2, **dadurch gekennzeichnet, dass** mindestens ein Bearbeitungsaggregat (14, 15, 16) in zumindest einer Richtung (Z) bezüglich des entsprechenden Förderelements (12) beweglich ist.

4. Bearbeitungsmaschine (1) gemäß einem der Ansprüche 1 bis 3, **dadurch gekennzeichnet, dass** das Bearbeitungsaggregat (14, 15, 16) um zumindest eine Achse (x, y, z) bezüglich des entsprechenden Förderelements (12) drehbar ist.

5. Bearbeitungsmaschine (1) gemäß einem der Ansprüche 1 bis 4, **dadurch gekennzeichnet, dass** mehrere Bearbeitungsaggregate (14, 15, 16) und/oder Förderelemente (12) unabhängig voneinander bewegbar sind.

6. Bearbeitungsmaschine gemäß einem der vorhergehenden Ansprüche, **dadurch gekennzeichnet, dass** mindestens ein Förderelement (12) einen Kreuzschlitten aufweist, an dem mindestens ein Bearbeitungsaggregat (14, 15, 16) und bevorzugt auch mindestens ein Zangenbacken der Greifeinrichtung eines Förderelements in zwei voneinander abweichenden Richtungen verfahrbar ist.

7. Bearbeitungsmaschine (1) gemäß einem der Ansprüche 1 bis 6, **dadurch gekennzeichnet, dass** ein Werkstück (W) mittels der Druckbalken (4a, 4b) mit einer vorbestimmten Klemmkraft klemmbar ist.

8. Bearbeitungsmaschine (1) gemäß einem der Ansprüche 1 bis 7, **dadurch gekennzeichnet, dass** die Greifeinrichtung (13) Bolzen (13a) aufweist, an welchen Bolzen (13a) ein Werkstück ausgerichtet werden kann.

9. Bearbeitungsmaschine (1) gemäß einem der Ansprüche 1 bis 8, **dadurch gekennzeichnet, dass** die Greifeinrichtung (13) bevorzugt drei Bolzen (13a) aufweist, bei denen eine alle Bolzen berührende Tangente an der zu einem Werkstück hinweisenden Seite eine Nulllinie (0) definiert.

10. Bearbeitungsmaschine (1) gemäß einem der Ansprüche 1 bis 9, **dadurch gekennzeichnet, dass** an einem ein Bearbeitungsaggregat (14, 15, 16) aufnehmenden Förderelement (12) ein Stützelement vorgesehen ist, das eingerichtet ist, ein Werkstück während der Bearbeitung in einer vertikalen Richtung zu stützen.

11. Bearbeitungsmaschine gemäß einem der vorhergehenden Ansprüche, **dadurch gekennzeichnet, dass** mindestens ein Förderelement (12) an der Längsseite des Maschinengestells zum Einführen des Werkstücks angeordnet ist und mindestens ein weiteres Förderelement (12) an der Längsseite des Maschinengestells zum Ausführen des Werkstücks angeordnet ist, wobei bevorzugt mindestens ein ausführseitiges Förderelement (12) ein Bearbeitungsaggregat (14, 15, 16) aufweist.

12. Bearbeitungsmaschine gemäß einem der vorhergehenden Ansprüche, **dadurch gekennzeichnet, dass** mindestens ein Bearbeitungsaggregat (14, 15, 16, 17) ausgewählt ist aus der Gruppe bestehend aus Bearbeitungsaggregat für formgebende, insbesondere spanende Bearbeitung, Montageaggregat zum Montieren von Bauteilen an dem Werkstück, Beschichtungsaggregat, insbesondere Kantenanleimaggregat, und Kantennachbearbeitungsaggregat.

13. Bearbeitungsmaschine gemäß einem der vorhergehenden Ansprüche, **dadurch gekennzeichnet, dass** sie ferner mindestens ein Magazin (18) für Bearbeitungsaggregate und/oder für Bauteile (18') zur Versorgung von Bearbeitungsaggregaten aufweist.

## Claims

1. Processing machine (1) for processing preferably panel-like workpieces in a processing chamber, wherein the processing machine has:
a machine frame,
a unit (3) arranged to be movable on the machine frame, which unit (3) has an upper and a lower clamping bar (4a, 4b) for guiding and holding a workpiece,
a conveying device (10) arranged on a longitudinal side of the machine frame, wherein at least one conveying element (12) is guided on the conveying device (10),
a gripping device (13) for gripping the workpiece, preferably two pincers, which is attached to at least one conveying element (12), and
wherein a processing assembly (14, 15, 16, 17) is attached to at least one conveying element (12),
**characterised in that**
the clamping bars (4a, 4b) holding a workpiece may carry out a movement in the direction of the processing assembly (14, 15, 16, 17) during processing by means of the processing assembly (14, 15, 16, 17), and
the unit (3) has upper and lower processing tools (5a, 5b) designed for processing the workpiece.

2. Processing machine (1) according to claim 1, **characterised in that** at least one conveying element (12) is guided along at least one conveying rail (11) of the conveying device (10).

3. Processing machine (1) according to one of claims 1 or 2, **characterised in that** at least one processing assembly (14, 15, 16) can be moved in at least one direction (Z) with respect to the corresponding conveying element (12).

4. Processing machine (1) according to one of claims 1 to 3, **characterised in that** the processing assembly (14, 15, 16) can be rotated about at least one axis (x, y, z) with respect to the corresponding conveying element (12).

5. Processing machine (1) according to one of claims 1 to 4, **characterised in that** several processing assemblies (14, 15, 16) and/or conveying elements (12) can be moved independently of one another.

6. Processing machine according to one of the preceding claims, **characterised in that** at least one conveying element (12) has a cross slide, on which at least one processing assembly (14, 15, 16) and preferably also at least one pincer jaw of the gripping device of a conveying element can be moved in two directions which are different from one another.

7. Processing machine (1) according to one of claims 1 to 6, **characterised in that** a workpiece (W) can be clamped at a predetermined clamping force by means of the clamping bars (4a, 4b).

8. Processing machine (1) according to one of claims 1 to 7, **characterised in that** the gripping device (13) has bolts (13a), on which bolts (13a) a workpiece may be aligned.

9. Processing machine (1) according to one of claims 1 to 8, **characterised in that** the gripping device (13) preferably has three bolts (13a), for which a tangent touching all bolts defines a zero line (0) on the side pointing to a workpiece.

10. Processing machine (1) according to one of claims 1 to 9, **characterised in that** a supporting element, which is equipped to support a workpiece during processing in a vertical direction, is provided on a conveying element (12) receiving a processing assembly (14, 15, 16).

11. Processing machine according to one of the preceding claims, **characterised in that** at least one conveying element (12) is arranged on the longitudinal side of the machine frame for introducing the workpiece and at least one further conveying element (12) is arranged on the longitudinal side of the machine frame for removing the workpiece, wherein preferably at least one conveying element (12) on the removal side has a processing assembly (14, 15, 16).

12. Processing machine according to one of the preceding claims, **characterised in that** at least one processing assembly (14, 15, 16, 17) is selected from the group consisting of processing assembly for shaping, in particular cutting processing, assembly unit for assembling components on the workpiece, coating unit, in particular edge-gluing unit, and edge-finishing unit.

13. Processing machine according to one of the preceding claims, **characterised in that** it also has at least one magazine (18) for processing assemblies and/or for components (18') to supply processing assemblies.

## Revendications

1. Machine d'usinage (1), destinée à usiner des pièces de préférence en forme de dalles dans un espace d'usinage, ladite machine d'usinage comprenant :
un bâti de machine,
une unité (3) disposée de manière à être mobile sur le bâti de machine, ladite unité (3) comportant une barre de pression supérieure et une barre de pression inférieure (4a, 4b) pour le guidage et le maintien d'une pièce,
un dispositif de transport (10) disposé sur une longueur du bâti de machine, au moins un élément de transport (12) étant guidé sur le dispositif de transport (10), et
un dispositif de préhension (13) pour saisir la pièce, de préférence deux pinces, lequel est appliqué contre au moins un élément de transport (12), et
dans lequel un groupe d'usinage (14, 15, 16, 17) est appliqué contre au moins un élément de transport (12),
**caractérisée**
**en ce que** les barres de pression (4a, 4b) maintenant une pièce pendant un usinage au moyen du groupe d'usinage (14, 15, 16, 17) peuvent effectuer un déplacement en direction dudit groupe d'usinage (14, 15, 16, 17), et
**en ce que** l'unité (3) comporte des outils d'usinage supérieurs et inférieurs (5a, 5b) prévus pour l'usinage de la pièce.

2. Machine d'usinage (1) selon la revendication 1, **caractérisée en ce qu'**au moins un élément de transport (12) est guidé le long d'au moins un rail de transport (11) du dispositif de transport (10).

3. Machine d'usinage (1) selon la revendication 1 ou la revendication 2, **caractérisée en ce qu'**au moins un groupe d'usinage (14, 15, 16) est déplaçable dans au moins une direction (Z) par rapport à l'élément de transport (12) correspondant.

4. Machine d'usinage (1) selon l'une des revendications 1 à 3, **caractérisée en ce que** le groupe d'usinage (14, 15, 16) est rotatif autour d'au moins un axe (x, y, z) par rapport à l'élément de transport (12) correspondant.

5. Machine d'usinage (1) selon l'une des revendications 1 à 4, **caractérisée en ce que** plusieurs groupes d'usinage (14, 15, 16) et/ou éléments de transport (12) sont déplaçables indépendamment les uns des autres.

6. Machine d'usinage selon l'une des revendications précédentes, **caractérisée en ce qu'**au moins un élément de transport (12) comporte un chariot à mouvements croisés, sur lequel au moins un groupe d'usinage (14, 15, 16) et de préférence aussi au moins une mâchoire de pince du dispositif de préhension d'un élément de transport sont déplaçables dans deux directions différentes.

7. Machine d'usinage (1) selon l'une des revendications 1 à 6, **caractérisée en ce qu'**une pièce (W) peut être serrée avec une force de serrage définie au moyen de la barre de pression (4a, 4b).

8. Machine d'usinage (1) selon l'une des revendications 1 à 7, **caractérisée en ce que** le dispositif de préhension (13) comporte des axes (13a), une pièce pouvant être ajustée contre lesdits axes (13a).

9. Machine d'usinage (1) selon l'une des revendications 1 à 8, **caractérisée en ce que** le dispositif de préhension (13) comporte de préférence trois axes (13a), pour lesquels une tangente au côté dirigé vers une pièce et contactant tous les axes définit une ligne neutre (0).

10. Machine d'usinage (1) selon l'une des revendications 1 à 9, **caractérisée en ce qu'**un élément d'appui est prévu sur un élément de transport (12) recevant un groupe d'usinage (14, 15, 16), lequel est prévu pour soutenir une pièce dans une direction verticale pendant l'usinage.

11. Machine d'usinage selon l'une des revendications précédentes, **caractérisée en ce qu'**au moins un élément de transport (12) est disposé sur la longueur du bâti de machine pour l'admission de la pièce, et au moins un autre élément de transport (12) sur la longueur du bâti de machine pour la sortie de la pièce, de préférence au moins un élément de transport (12) côté sortie étant pourvu d'un groupe d'usinage (14, 15, 16).

12. Machine d'usinage selon l'une des revendications précédentes, **caractérisée en ce qu'**au moins un groupe d'usinage (14, 15, 16, 17) est sélectionné dans le groupe composé d'un groupe d'usinage pour l'usinage de conformation, en particulier par enlèvement de copeaux, d'un groupe de montage pour le montage de composants sur la pièce, d'un groupe de revêtement, en particulier d'un groupe de collage de chants, et d'un groupe de post-usinage de chants.

13. Machine d'usinage selon l'une des revendications précédentes, **caractérisée en ce que** celles-ci comporte en outre au moins un magasin (18) pour groupes d'usinage et/ou pour composants (18') destiné à alimenter les groupes d'usinage.
